# EUROPEAN PATENT APPLICATION

(11) **EP 3 553 343 A1**
(43) Date of publication of application: **16.10.2019**
(21) Application number: 17886050.8
(22) Date of filing: 15.12.2017
(51) Int. Cl.: F16H 48/34, B62D 11/04, B60K 17/16

(54) **DRIVING SHAFT LOCK-UP DEVICE, POWER DRIVING SYSTEM, AND VEHICLE**

(30) Priority: 27.12.2016 CN 201611229306
(71) Applicant: BYD Company Limited, Shenzhen, Guangdong 518118 (CN)
(72) Inventor: BEI, Ming, Shenzen Guangdong 518118 (CN); LING, Heping, Shenzen Guangdong 518118 (CN); ZHAI, Zhen, Shenzen Guangdong 518118 (CN); HUANG, Changan, Shenzen Guangdong 518118 (CN); LUO, Yongmeng, Shenzen Guangdong 518118 (CN)
(74) Representative: Hoffmann Eitle
(86) International application number: PCT/CN2017/116619
(87) International publication number: WO 2018/121299

(57) **Abstract**

The present invention discloses a drive shaft locking device, a power-driven system, and a vehicle. The drive shaft locking device comprises a planetary gear mechanism; a first drive shaft, a second drive shaft, and a power joint device, wherein the power joint device comprises a first joint part and a second joint part, planetary carriers, the first drive shaft and the first joint part synchronously rotate, the first joint part can move along the axial direction relative to the first drive shaft, and the second drive shaft, the second joint part and a sun gear synchronously rotate; a joint part drive device, wherein the joint part drive device comprises a drive needle and a drive part, the drive needle is configured to be capable of rotating around the central axis of the sun gear along with a gear ring and capable of moving along the axial direction relative to the gear ring, and the drive part is used for driving the drive needle to drive the first joint part to move towards the direction close to the second joint part along the axial direction, so that the first joint part is jointed with the second joint part. Thus, the drive shaft locking device can lock two drive shafts and can improve the capability of the vehicle to get rid of the trouble.

## Description

### CROSS-REFERENCE TO RELATED APPLICATIONS

This application claims priority to Chinese Patent Application Serial No. 201611229306.X, filed with the State Intellectual Property Office of P. R. China on December 27, 2016. The entire content of the above-referenced application is incorporated herein by reference.

### FIELD

The present invention relates to the technical field of vehicles, and particularly relates to a drive shaft locking device for a vehicle, a power-driven system with the drive shaft locking device, and a vehicle with the power-driven system.

### BACKGROUND

In related technologies, a new energy vehicle adopts a distributed drive mode. Wheels at two sides are respectively driven by two motors, and the rotation speeds and torques of the left and right wheels can be independently adjusted respectively by a controller, thus canceling a differential mechanism. However, under some road conditions where the vehicle is easy to slide, a left half shaft and a right half shaft still need to be locked so as to improve the trafficability. If a traditional electric locking differential mechanism is applied to a distributed-drive new energy vehicle, the differential function of the differential mechanism is wasted. Furthermore, the traditional electric locking differential mechanism has a complicated structure, has more parts, and occupies a larger space.

### SUMMARY

An objective of the present invention is to at least resolve one of the technical problems in the related art to some extent. Therefore, the present invention provides a drive shaft locking device for a vehicle. The drive shaft locking device can lock two drive shafts and is favorable for the vehicle to get rid of the trouble.

The present invention further provides a power-driven system.

The present invention further provides a vehicle.

The drive shaft locking device for the vehicle, provided by the present invention, comprises a planetary gear mechanism, wherein the planetary gear mechanism comprises a sun gear, planetary gears, planetary carriers and a gear ring; a first drive shaft, a second drive shaft, and a power joint device, wherein the power joint device comprises a first joint part and a second joint part, wherein the planetary carriers are respectively connected with the first drive shaft and the first joint part so as to enable the planetary carriers, the first drive shaft and the first joint part to synchronously rotate, the first joint part moves along the axial direction relative to the first drive shaft, and the second drive shaft is respectively connected with the sun gear and the second joint part so as to enable the second drive shaft, the second joint part and the sun gear to synchronously rotate; a joint part drive device, wherein the joint part drive device comprises a drive needle and a drive part, the drive needle is configured to be capable of rotating around the central axis of the sun gear along with the gear ring and capable of moving along the axial direction relative to the gear ring, two ends of the drive needle are respectively matched with the drive part and the first joint part, and the drive part is configured to be used for driving the drive needle to drive the first joint part to move towards the direction close to the second joint part along the axial direction, so that the first joint part is jointed with the second joint part.

According to the drive shaft locking device provided by the present invention, when the first joint part is jointed with the second joint part, the first drive shaft and the second drive shaft are mutually locked, and the first drive shaft and the second drive shaft can synchronously rotate, thereby being favorable for the vehicle to get rid of the trouble. Furthermore, by means of arrangement of the joint part drive device and the power joint device, the locking of the first drive shaft and the second drive shaft can be realized. Thus, the drive shaft locking device has the advantages of simple structure, reliable function realization, few parts, small volume and low cost.

In addition, the drive shaft locking device provided by the present invention can also have the following distinguishing technical features:

In some examples of the present invention, two planetary carriers are provided and are respectively arranged at two sides of the sun gear.

In some examples of the present invention, the two planetary carriers are divided into an axially fixed planetary carrier and an axially moving planetary carrier, the axially fixed planetary carrier is fixed with the first drive shaft, the axially moving planetary carrier can move along the axial direction relative to the axially fixed planetary carrier, and the axially moving planetary carrier is fixed with the first joint part.

In some examples of the present invention, the planetary gears are provided with planetary gear shafts, the planetary gear shafts are respectively connected with the axially fixed planetary carrier and the axially moving planetary carrier, and the planetary gear shafts and the axially moving planetary carrier are in slide connection.

In some examples of the present invention, the gear ring is provided with a drive needle axial groove, and the drive needle is slidably arranged in the drive needle axial groove.

In some examples of the present invention, the drive shaft locking device further comprises: elastic devices, wherein the elastic devices are elastically arranged between the first joint part and the second joint part so as to enable the first joint part to have the trend of moving towards the direction away from the second joint part.

In some examples of the present invention, the drive part comprises: a following part, wherein the following part can rotate along with the drive needle, and the following part can be braked; the following part is provided with a drive surface; and when the following part is braked, the drive surface drives the drive needle to move along the axial direction by means of the slide of the drive needle on the drive surface, so that the first joint part is jointed with the second joint part.

In some examples of the present invention, the drive part further comprises: a braking part, wherein the braking part is configured to be used for braking the following part.

In some examples of the present invention, the braking part is configured to brake the following part by means of an electromagnetic force.

In some examples of the present invention, the drive part is an electromagnetic brake, the following part constitutes a braking component of the electromagnetic brake, and the braking part constitutes a braking frame of the electromagnetic brake.

In some examples of the present invention, the following part hollowly sleeves the first drive shaft.

In some examples of the present invention, the drive surface is an inclined surface or a curved surface.

In some examples of the present invention, the drive surface comprises a first section and a second section, wherein the first section is connected with the second section, the connection part of the first section and the second section is the lowest point, and the other ends of the first section and the second section away from the connection part are the highest points.

In some examples of the present invention, the following part comprises: a following part body and an annular following part flange arranged on the following part body, wherein the end surface of the following part flange facing the drive needle is provided with the drive surface.

In some examples of the present invention, the drive surface is provided with a drive surface limiting groove, and one end of the drive needle is positioned in the drive surface limiting groove.

In some examples of the present invention, the first joint part hollowly sleeves the second drive shaft.

In some examples of the present invention, the first joint part is provided with a plurality of first joint teeth distributed along the circumferential direction, and the second joint part is provided with a plurality of second joint teeth distributed along the circumferential direction.

In some examples of the present invention, the drive needle is fit with the first joint part.

The power-driven system provided by the present invention comprises: the drive shaft locking device for the vehicle; a first motor generator, wherein the first motor generator is in transmission with the first drive shaft and outputs power to one of a pair of wheels; and a second motor generator, wherein the second motor generator is in transmission with the second drive shaft and outputs power to the other one of the pair of wheels.

The beneficial effects of the power-driven system are the same as the beneficial effects of the drive shaft locking device, so that the descriptions are omitted herein.

The vehicle provided by the present invention comprises the power-driven system.

The beneficial effects of the vehicle are the same as the beneficial effects of the power-driven system, so that the descriptions are omitted herein.

### BRIEF DESCRIPTION OF THE DRAWINGS

FIG. 1 is a schematic diagram of a drive shaft locking device according to an embodiment of the present invention;
FIG. 2 is an exploded diagram of a drive shaft locking device according to an embodiment of the present invention;
FIG. 3 is a structural diagram of a following part;
FIG. 4 is a schematic diagram of a power-driven system according to an embodiment of the present invention; and
FIG. 5 is a schematic diagram of a power-driven system according to an embodiment of the present invention.

### Reference numerals of the accompanying drawing:

Power-driven system 1000;
Drive shaft locking device 100;
Planetary gear mechanism 10; Sun gear 11; Planetary gear 12; Planetary carrier 13; Axially fixed planetary carrier 131; Axially moving planetary carrier 132;
Gear ring 14; Drive needle axial groove 141;
First drive shaft 20; Second drive shaft 30;
Power joint device 40; First joint part 41; First joint tooth 411;
Second joint part 42; Second joint tooth 422;
Joint part drive device 50; Drive needle 51; Drive part 52; Following part 521; Following part body 521 a; Following part flange 521b;
Braking part 522;
Drive surface 523; First section 523a; Second section 523b; Drive surface limiting groove 523c;
Elastic device 70;
First motor generator D1; Second motor generator D2; Third motor generator D3; Fourth motor generator D4;
Left front wheel Z1; Left rear wheel Z2; Right front wheel Y1; Right rear wheel Y2.

### DETAILED DESCRIPTION

The embodiments of the present invention are described in detail below. Examples of the embodiments are illustrated in the accompanying drawings. The following embodiments described with reference to the accompanying drawings are exemplary, and are intended to describe the present invention and cannot be construed as a limitation to the present invention.

A drive shaft locking device 100 according to an embodiment of the present invention is described in detail below with reference to the accompanying drawings. The drive shaft locking device 100 can be applied to a vehicle and is particularly applicable to a new energy vehicle adopting distributed drive. The drive shaft locking device 100 can be used for locking two drive shafts so as to enable left and right wheels to synchronously rotate, thereby greatly improving the capability of the vehicle to get rid of the trouble. The vehicle can be an electric vehicle, but is not limited thereto.

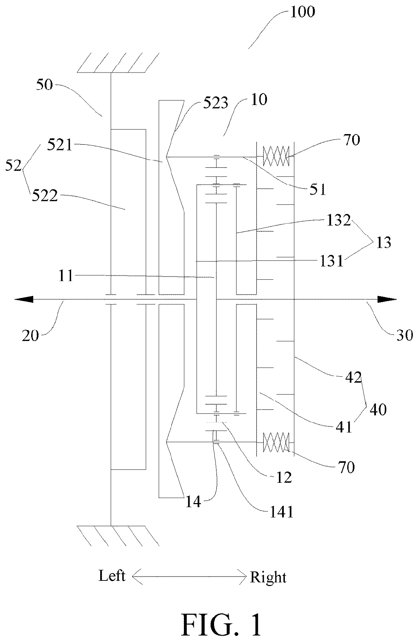

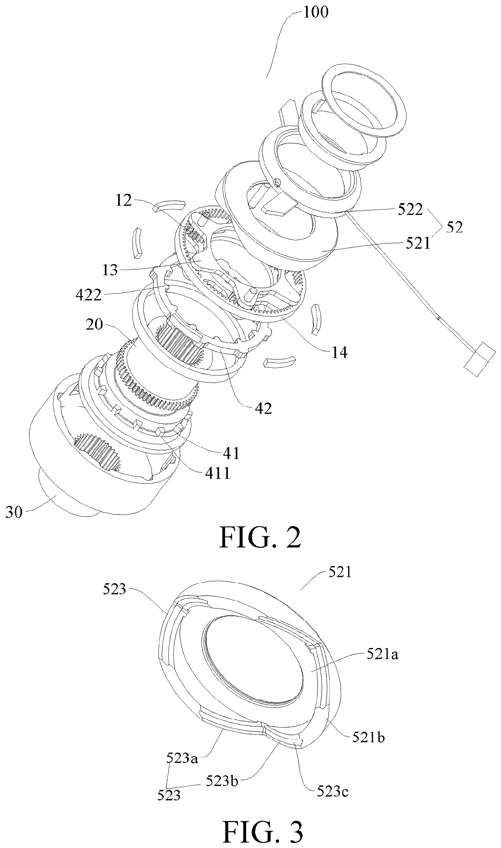

As shown in FIG. 1 and FIG. 2, the drive shaft locking device 100 according to an embodiment of the present invention can comprise: a planetary gear mechanism 10, a first drive shaft 20, a second drive shaft 30, a power joint device 40, and a joint part drive device 50.

The planetary gear mechanism 10 comprises a sun gear 11, planetary gears 12, planetary carriers 13, and a gear ring 14, wherein the planetary gears 12 can be rotationally mounted on the planetary carriers 13, and the planetary gears 12 are meshed between the sun gear 11 and the gear ring 14, therefore, the planetary gears 12 can transmit power between the sun gear 11 and the gear ring 14. A plurality of, for example three, planetary gears 12 can be provided, and the three planetary gears 12 can be uniformly distributed with respect to the central axis of the sun gear 11. Planetary gear shafts can be mounted on the planetary carriers 13, and the planetary gears 12 are mounted on the planetary gear shafts.

The first drive shaft 20 and the second drive shaft 30 are two independent shafts. For example, the first drive shaft 20 can be in transmission with a left wheel, and the second drive shaft 30 can be in transmission with a right wheel. The axis of the first drive shaft 20 and the axis of the second drive shaft 30 can be collinear. But the present invention is not limited thereto. For example, the first drive shaft 20 can be a right half shaft, and the second drive shaft 30 can be a left half shaft.

The power joint device 40 can comprise a first joint part 41 and a second joint part 42. As shown in FIG. 1, the planetary carriers 13 are respectively connected with the first drive shaft 20 and the first joint part 41 so as to enable the planetary carriers 13, the first drive shaft 20 and the first joint part 41 to synchronously rotate, and the first joint part 41 moves along the axial direction relative to the first drive shaft.

The second drive shaft 30 can be respectively connected with the sun gear 11 and the second joint part 42 so as to enable the second drive shaft 30, the second joint part 42 and the sun gear 11 to synchronously rotate.

The joint part drive device 50 can comprise: a drive needle 51 and a drive part 52, wherein the drive needle 51 is configured to be capable of rotating around the central axis of the sun gear 11 along with the gear ring 14, and the drive needle 51 is configured to be capable of moving along the axial direction relative to the gear ring 14.

Two ends of the drive needle 51 are respectively matched with the drive part 52 and the first joint part 41. The drive part 52 is configured to be used for driving the drive needle 51 to move along the axial direction so as to enable the drive needle 51 to drive the first joint part 41 to move towards the direction close to the second joint part 42 along the axial direction (from left to right as shown in FIG. 1), so that the first joint part 41 is jointed with the second joint part 42.

In other words, the gear ring 14 can drive the drive needle 51 to synchronously rotate. For example, as shown in FIG. 1, the gear ring 14 is provided with a drive needle axial groove 141, and the drive needle 51 can be slidably arranged in the drive needle axial groove 141. Furthermore, the drive part 52 can drive the drive needle 51 to move from left to right, and one end of the drive needle 51 is matched with the first joint part 41, thus the drive needle 51 can synchronously drive the first joint part 41 to move from left to right, and the first joint part 41 continuously approaches the second joint part 42 until the first joint part 41 is jointed with the second joint part 42. When the first joint part 41 is jointed with the second joint part 42, the first drive shaft 20 and the second drive shaft 30 are mutually locked, and the first drive shaft 20 and the second drive shaft 30 can synchronously rotate, thus the power at the sliding side can be output by means of the other side so as to be favorable for the vehicle to get rid of the trouble.

A traditional electric locking differential mechanism is formed by additionally arranging an electric actuation locking mechanism on a common open differential mechanism, so that the differential mechanism has a locking function, and the locking of the differential mechanism is realized by means of electrical control. The electric locking differential mechanism is usually applied to a centralized drive type fuel vehicle, wherein the power passes through a main reducing gear and the differential mechanism and is then distributed to a left half shaft and a right half shaft, and the speed difference between a left wheel and a right wheel is adjusted by means of the differential mechanism. However, the electric locking differential mechanism cannot be directly applied to an electric vehicle. The electric locking differential mechanism has a large volume, and the electric vehicle does not have an engine.

Therefore, the drive shaft locking device 100 provided by the present invention is significantly different from the traditional electric locking differential mechanism in structure and realization mode. Furthermore, by means of arrangement of the joint part drive device 50 and the power joint device 40, the locking of the first drive shaft 20 and the second drive shaft 30 can be realized, thus, the drive shaft locking device 100 has the advantages of simple structure, reliable function realization, few parts, small volume and low cost. The power joint device 40 is reliable and stable in jointing and can improve the working reliability of the drive shaft locking device 100.

As shown in FIG. 1, the planetary gear mechanism 10, the power joint device 40, the first drive shaft 20 and the second drive shaft 30 are coaxially arranged. Therefore, the drive shaft locking device 100 can have a small radial size, a small volume and a small occupied space.

According to a preferable embodiment of the present invention, as shown in FIG. 1, two planetary carriers 13 can be provided, and the two planetary carriers 13 are respectively arranged at two sides of the sun gear 11. The structural reliability of the planetary gear mechanism 10 can be facilitated, and the planetary carriers 13 can be respectively connected with the first drive shaft 20 and the first joint part 41, so that the structural reliability of the drive shaft locking device 100 can be improved, and the mounting coaxiality of the drive needle 51 can be increased so as to ensure that the drive needle 51 is not easy to deviate when moving along the axial direction.

Further, as shown in FIG. 1, the two planetary carriers 13 can be divided into an axially fixed planetary carrier 131 and an axially moving planetary carrier 132, the axially fixed planetary carrier 131 is fixed with the first drive shaft 20, the axially moving planetary carrier 132 can move along the axial direction relative to the axially fixed planetary carrier 131, and the axially moving planetary carrier 132 is fixed with the first joint part 41. In other words, the axially fixed planetary carrier 131 can be used for being fixed with the first drive shaft 20, and the axially moving planetary carrier 132 can be used for being fixed with the first joint part 41, thus by means of the axial movement of the axially moving planetary carrier 132 relative to the first drive shaft 20 and the axially fixed planetary carrier 131, the first joint part 41 can be promoted to move towards the second joint part 42 along the axial direction, and the first drive shaft 20, the axially fixed planetary carrier 131, the axially moving planetary carrier 132 and the first joint part 41 can be enabled to synchronously rotate.

Specifically, the planetary gears 12 can be provided with planetary gear shafts, and the planetary gear shafts are respectively connected with the axially fixed planetary carrier 131 and the axially moving planetary carrier 132, wherein the planetary gear shafts are in slide connection with the axially moving planetary carrier 132. Thus, the axial movement of the axially moving planetary carrier 132 can be facilitated, and the working reliability of the drive shaft locking device 100 can be ensured.

Preferably, as shown in FIG. 1, the drive shaft locking device 100 can further comprise: elastic devices 70, wherein the elastic devices 70 are elastically arranged between the first joint part 41 and the second joint part 42 so as to enable the first joint part 41 to have the trend of moving towards the direction away from the second joint part 42. Therefore, the elastic devices 70 can supply an opposite force to the first joint part 41, and can promote the first joint part 41 to move towards the direction away from the second joint part 42 along the axial direction until the first joint part 41 is completely separated from the second joint part 42, and at this time, the the drive shaft locking device 100 releases the locking of the two drive shafts.

As shown in FIG. 1, the drive part 52 can comprise: a following part 521, wherein the following part 521 can rotate along with the drive needle 51, and the following part 521 can be braked; the following part 521 is provided with a drive surface 523; and when the following part 521 is braked, the contact matching position of the drive needle 51 and the drive surface 523 is changed by means of the slide of the drive needle 51 on the drive surface 523, so that the drive surface 523 drives the drive needle 51 to move along the axial direction so as to enable the first joint part 41 to be jointed with the second joint part 42. It can be understood that before the following part 521 is braked, the following part 521 and the drive needle 51 synchronously rotate; after the following part 521 is braked, the rotation speed of the following part 521 is reduced, and the following part 521 and the drive needle 51 have a rotation speed difference, so that the drive needle 51 can slide on the drive surface 523 of the following part 521; and the drive needle 51 after sliding can move along the axial direction relative to the planetary carriers 13, so that the drive needle 51 can drive the first joint part 41 to gradually approach the second joint part 42 until the first joint part 41 is jointed with the second joint part 42.

Further, as shown in FIG. 1, the drive part 52 can further comprise: a braking part 522, wherein the braking part 522 is configured to be used for braking the following part 521. In other words, the braking part 522 can achieve the effect of braking the following part 521. When the first joint part 41 and the second joint part 42 need to be jointed, the braking part 522 can brake the following part 521.

Preferably, the braking part 522 can be configured to brake the following part 521 by means of an electromagnetic force. The electromagnetic force is precise and reliable in control, so that the working reliability of the drive shaft locking device 100 can be improved, and the service life of the drive shaft locking device 100 can be prolonged. For example, the drive part 52 can be an electromagnetic brake, the following part 521 constitutes a braking component of the electromagnetic brake, and the braking part 522 constitutes a braking frame of the electromagnetic brake. By adopting the control mode of the electromagnetic brake and the planetary gear mechanism, the control system of the drive shaft locking device 100 can be simplified, and the system reliability can be further improved.

Optionally, as shown in FIG. 1, the following part 521 can hollowly sleeve the first drive shaft 20. Therefore, the matching between the following part 521 and the drive needle 51 can be further facilitated, the axial length of the drive shaft locking device 100 can also be reduced at least to a certain extent, and the volume of the drive shaft locking device 100 can be reduced.

According to a specific embodiment of the present invention, as shown in FIG. 3, the drive surface 523 can be an inclined surface or a curved surface. The drive surface 523 is configured as an inclined surface or a curved surface to facilitate the slide of the drive needle 51 on the drive surface 523, and the drive needle 51 can be promoted to move along the axial direction.

Further, the drive surface 523 can comprise: a first section 523a and a second section 523b, wherein the first section 523a is connected with the second section 523b, the connection part of the first section 523 a and the second section 523b is the lowest point, and the other ends of the first section 523 a and the second section 523b away from the connection part are the highest points. Therefore, when one end of the drive needle 51 is positioned at the lowest point, the first joint part 41 and the second joint part 42 are in a separated state; and when one end of the drive needle 51 is positioned at the highest point or is adjacent to the highest point, the first joint part 41 and the second joint part 42 are in a jointed state. By means of reasonable arrangement of the drive surface 523, the slide of the drive needle 51 between the lowest point and the highest point can be facilitated, the jointing between the first joint part 41 and the second joint part 42 can be facilitated, and the working reliability of the drive shaft locking device 100 can be improved.

Preferably, each of the first section 523 a and the second section 523b can be of an arc shape. The first section 523a and the second section 523b in the arc shape can facilitate the slide of one end of the drive needle 51 on the drive surface 523, and can reduce the moving resistance of the drive needle 51.

Optionally, each of the first section 523 a and the second section 523b has the same central angle. Thus, the first section 523a and the second section 523b are basically identical, thereby further facilitating the slip of the drive needle 51 on the drive surface 523.

Optionally, multiple sections of drive surfaces 523 can be provided, and the multiple sections of drive surfaces 523 are distributed at intervals along the circumferential direction. Therefore, the number of the drive needles 51 can be corresponding to the number of the drive surfaces 523, so that the number of the drive needles 51 can be increased, a plurality of drive needles 51 can be reliably matched with the first joint part 41, the second joint part 42 can reliably move along the axial direction, and the work of the drive shaft locking device 100 is more reliable.

Multiple sections of drive surfaces 523 can be connected by means of a connection plane, and the connection plane is flush with the highest point. Thus, the structural reliability of the drive surface 523 of the following part 521 can be improved at least to a certain extent, and the structural reliability of the drive shaft locking device 100 can be improved.

According to an optional embodiment of the present invention, as shown in FIG. 3, the following part 521 can comprise: a following part body 521a and an annular following part flange 521b arranged on the following part body 521a, wherein the end surface of the following part flange 521b facing the drive needle 51 is provided with the drive surface 523. The following part body 521a can effectively enhance the structural reliability of the following part 521, and the drive surface 523 can be arranged on the end surface of the following part flange 521b, so that the design difficulty of the drive surface 523 can be lowered, and the structural reliability of the drive surface 523 can be improved.

Further, as shown in FIG. 3, the drive surface 523 can be provided with a drive surface limiting groove 523c, and one end of the drive needle 51 is positioned in the drive surface limiting groove 523c. By forming the drive surface limiting groove 523c, one end of the drive needle 51 can be matched in the drive surface limiting groove 523c, so that one end of the drive needle 51 can be prevented from being separated from the drive surface 523 at least to a certain extent, and the reliability and reliability of the drive needle 51 moving on the drive surface 523 can be improved.

As shown in FIG. 1, the first joint part 41 can hollowly sleeve the second drive shaft 30. By means of arrangement of the first joint part 41, the axial size of the drive shaft locking device 100 can be reduced, and the volume of the drive shaft locking device 100 can be reduced. In addition, the arrangement reliability of the first joint part 41 can also be improved.

Specifically, as shown in FIG. 2, the first joint part 41 is provided with a plurality of first joint teeth 411 distributed along the circumferential direction, and the second joint part 42 is provided with a plurality of second joint teeth 422 distributed along the circumferential direction. It can be understood that when the first joint teeth 411 are matched with the second joint teeth 422, the first joint part 41 is jointed with the second joint part 42. By means of arrangement of the plurality of first joint teeth 411 and the plurality of second joint teeth 422, the matching reliability of the first joint part 41 and the second joint part 42 can be improved.

The drive needle 51 is fit with the first joint part 41. By means of fitting, the matching reliability between the drive needle 51 and the first joint part 41 can be ensured, and the working reliability of the drive shaft locking device 100 can be improved.

A power-driven system 1000 according to an embodiment of the present invention is described in detail below.

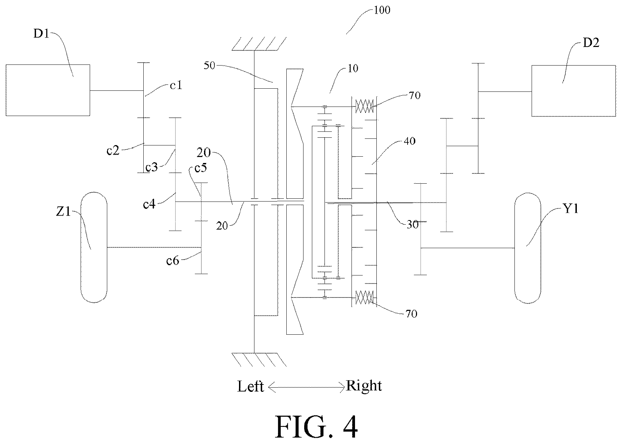

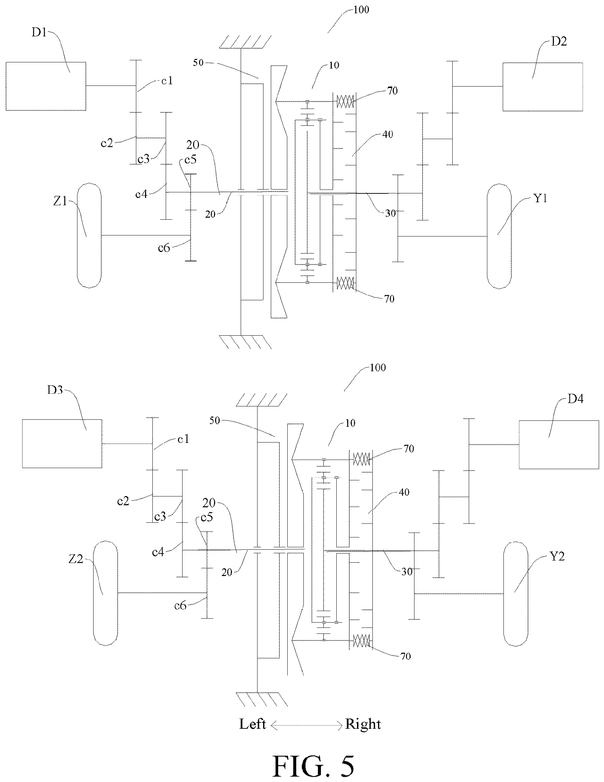

As shown in FIG. 4 and FIG. 5, the power-driven system 1000 can comprise the drive shaft locking device 100 for the vehicle according to the above embodiment, a first motor generator D1 and a second motor generator D2, wherein the first motor generator D1 is in transmission with the first drive shaft 20, and the first motor generator D1 outputs power to one of a pair of wheels; and the second motor generator D2 is in transmission with the second drive shaft 30, and the second motor generator D2 outputs power to the other one of the pair of wheels. When the drive shaft locking device 100 locks the first drive shaft 20 and the second drive shaft 30, the two wheels synchronously rotate; and when the drive shaft locking device 100 does not lock the first drive shaft 20 and the second drive shaft 30, the first motor generator D1 and the second motor generator D2 work separately so as to drive the corresponding wheels to rotate at a suitable rotation speed.

As shown in FIG. 4, in the power-driven system 1000, the drive shaft locking device 100 according to the above embodiment can be only applied to a group of wheels. A first gear c1, a second gear c2, a third gear c3, a fourth gear c4, a fifth gear c5, and a sixth gear c6 are arranged between the first motor generator D1 and a left front wheel Z1, wherein the first gear c 1 is fixed on the motor shaft of the first motor generator D1, the second gear c2 is meshed with the first gear c1, the second gear c2 and the third gear c3 are coaxially fixed, the third gear c3 is meshed with the fourth gear c4, the fourth gear c4 is fixed on the first drive shaft 20, the fifth gear c5 is fixed on the first drive shaft 20, the half shaft of the left front wheel Z1 is connected with the sixth gear c6, and the fifth gear c5 is meshed with the sixth gear c6. Thus, the power of the first motor generator D1 can be transmitted to the left front wheel Z1 by means of the three groups of meshed gears. Of course, the first drive shaft 20 can also achieve corresponding effects in transmission processes and can achieve the effects of speed reduction and torque increase between the first gear c1 and the second gear c2 as well as between the third gear c3 and the fourth gear c4.

Of course, the present invention is not limited thereto. As shown in FIG. 5, in the power-driven system 1000, the drive shaft locking device 100 according to the above embodiment can be applied to two groups of wheels. For example, two drive shaft locking devices 100 can be provided, wherein one drive shaft locking device 100 is matched in a left front wheel Z1 and a right front wheel Y1, the first motor generator D1 is in transmission with the first drive shaft 20 of the drive shaft locking device 100, and the second motor generator D2 is in transmission with the second drive shaft 30 of the drive shaft locking device 100.

The other drive shaft locking device 100 is matched in a left rear wheel Z2 and a right rear wheel Y2, a third motor generator D3 is in transmission with the first drive shaft 20 of the drive shaft locking device 100, and a fourth motor generator D4 is in transmission with the second drive shaft 30 of the drive shaft locking device 100.

The working processes and principles of the drive shaft locking device 100 according to the embodiments of the present invention are described in detail below with reference to the specific embodiments as shown in FIG. 1 in conjunction with FIG. 4.

When a vehicle runs normally along a straight line, the first motor generator D1 and the second motor generator D2 work separately, and a controller of the vehicle can control the first motor generator D1 and the second motor generator D2 to work in the same direction and at the same speed, so that the left front wheel Z1 and the right front wheel Y1 can rotate at the same speed and in the same direction.

When the vehicle turns normally, the controller can control the first motor generator D1 and the second motor generator D2 to work in the same direction and at different rotation speeds. For example, when the vehicle needs to turn left, the rotation speed of the first motor generator D1 can be less than the rotation speed of the second motor generator D2, and then, the rotation speed of the right front wheel Y1 is greater than the rotation speed of the left front wheel Z1, so that the vehicle turns left.

In the process that the vehicle runs normally along a straight line or the vehicle turns normally, under the action of the elastic devices 70, one end of the drive needle 51 in the drive shaft locking device 100 is positioned at the lowest point of the drive surface 523 of the following part 521, and at this time, the drive needle 51 and the following part 521 synchronously rotate.

When the vehicle is in trouble and slides, a driver controls the electromagnetic brake to be electrified to work, the braking frame brakes the braking component to enable the rotation speed of the braking component to be inhibited, a rotation speed difference is generated between the drive needle 51 and the braking component, the drive needle 51 slides on the drive surface 523 of the braking component, the drive needle 51 can slide from the lowest point of the drive surface 523 to the highest point or the position adjacent to the highest point, the drive needle 51 moves towards one side of the first joint part 41 along the axial direction, then the drive needle 51 can also drive the first joint part 41 to gradually approach the second joint part 42 until the first joint part 41 is jointed with the second joint part 42, and at this time, the first drive shaft 20 and the second drive shaft 30 synchronously rotate, thereby improving the capability of the vehicle to get rid of the trouble.

After the vehicle gets rid of the trouble, the driver can press the electromagnetic brake again, the electromagnetic brake is powered off, the elastic devices move towards the direction away from the second joint part 42 along the axial direction, in this process, the drive needle 51 moves along with the first joint part 41 along the axial direction, one end of the drive needle 51 matched with the drive surface 523 can gradually slide to the lowest point from the highest point or the position adjacent to the highest point, at this time, the second joint part 42 and the first joint part 41 are completely separated, and the vehicle can continue to run normally along a straight line or to turn normally.

The vehicle according to the embodiments of the present invention comprises the power-driven system 1000 according to the above embodiment.

In the description of the specification, the description made with reference to terms such as "one embodiment", "some embodiments", "example", "specific example", or "some examples" means that a specific characteristic, structure, material or feature described with reference to the embodiment or example is included in at least one embodiment or example of the present invention. In this specification, schematic descriptions of the foregoing terms do not need to aim at a same embodiment or example. In addition, the described specific features, structures, materials, or characteristics may be combined in a proper manner in any one or more of the embodiments or examples. In addition, a person skilled in the art may integrate or combine different embodiments or examples and characteristics of different embodiments or examples described in the specification, as long as they do not conflict each other.

Although the embodiments of the present invention are shown and described above, it can be understood that, the foregoing embodiments are exemplary, and cannot be construed as a limitation to the present invention. Within the scope of the present invention, a person of ordinary skill in the art may make changes, modifications, replacement, and variations to the foregoing embodiments.

## Claims

1. A drive shaft locking device for a vehicle, comprising:
a planetary gear mechanism, wherein the planetary gear mechanism comprises a sun gear, planetary gears, planetary carriers, and a gear ring;
a first drive shaft, a second drive shaft, and a power joint device, wherein the power joint device comprises a first joint part and a second joint part, wherein the planetary carriers are respectively connected with the first drive shaft and the first joint part so as to enable the planetary carriers, the first drive shaft and the first joint part to synchronously rotate, the first joint part can move along the axial direction relative to the first drive shaft, and the second drive shaft is respectively connected with the sun gear and the second joint part so as to enable the second drive shaft, the second joint part and the sun gear to synchronously rotate; and
a joint part drive device, wherein the joint part drive device comprises a drive needle and a drive part, wherein the drive needle is configured to be capable of rotating around the central axis of the sun gear along with the gear ring and capable of moving along the axial direction relative to the gear ring, two ends of the drive needle are respectively matched with the drive part and the first joint part, and the drive part is configured to be used for driving the drive needle to drive the first joint part to move towards the direction close to the second joint part along the axial direction, so that the first joint part is jointed with the second joint part.

2. The drive shaft locking device for the vehicle according to claim 1, wherein two planetary carriers are provided and are respectively arranged at two sides of the sun gear.

3. The drive shaft locking device for the vehicle according to claim 2, wherein the two planetary carriers are divided into an axially fixed planetary carrier and an axially moving planetary carrier, the axially fixed planetary carrier is fixed with the first drive shaft, the axially moving planetary carrier can move along the axial direction relative to the axially fixed planetary carrier, and the axially moving planetary carrier is fixed with the first joint part.

4. The drive shaft locking device for the vehicle according to claim 3, wherein the planetary gears are provided with planetary gear shafts, the planetary gear shafts are respectively connected with the axially fixed planetary carrier and the axially moving planetary carrier, and the planetary gear shafts and the axially moving planetary carrier are in slide connection.

5. The drive shaft locking device for the vehicle according to any one of claims 1-4, wherein the gear ring is provided with a drive needle axial groove, and the drive needle is slidably arranged in the drive needle axial groove.

6. The drive shaft locking device for the vehicle according to any one of claims 1-5, further comprising: elastic devices, wherein the elastic devices are elastically arranged between the first joint part and the second joint part so as to enable the first joint part to have the trend of moving towards the direction away from the second joint part.

7. The drive shaft locking device for the vehicle according to any one of claims 1-6, wherein the drive part comprises:
a following part, wherein the following part can rotate along with the drive needle, and the following part can be braked; the following part is provided with a drive surface; and when the following part is braked, the drive surface drives the drive needle to move along the axial direction by means of the slide of the drive needle on the drive surface, so that the first joint part is jointed with the second joint part.

8. The drive shaft locking device for the vehicle according to claim 7, wherein the drive part further comprises:
a braking part, wherein the braking part is configured to be used for braking the following part.

9. The drive shaft locking device for the vehicle according to claim 8, wherein the braking part is configured to brake the following part by means of an electromagnetic force.

10. The drive shaft locking device for the vehicle according to claim 9, wherein the drive part is an electromagnetic brake, the following part constitutes a braking component of the electromagnetic brake, and the braking part constitutes a braking frame of the electromagnetic brake.

11. The drive shaft locking device for the vehicle according to any one of claims 7-10, wherein the following part hollowly sleeves the first drive shaft.

12. The drive shaft locking device for the vehicle according to any one of claims 7-10, wherein the drive surface is an inclined surface or a curved surface.

13. The drive shaft locking device for the vehicle according to any one of claims 7-10, wherein the drive surface comprises a first section and a second section, wherein the first section is connected with the second section, the connection part of the first section and the second section is the lowest point, and the other ends of the first section and the second section away from the connection part are the highest points.

14. The drive shaft locking device for the vehicle according to claim 13, wherein the following part comprises: a following part body and an annular following part flange arranged on the following part body, wherein the end surface of the following part flange facing the drive needle is provided with the drive surface.

15. The drive shaft locking device for the vehicle according to any one of claims 7-10, wherein the drive surface is provided with a drive surface limiting groove, and one end of the drive needle is positioned in the drive surface limiting groove.

16. The drive shaft locking device for the vehicle according to any one of claims 1-15, wherein the first joint part hollowly sleeves the second drive shaft.

17. The drive shaft locking device for the vehicle according to any one of claims 1-16, wherein the first joint part is provided with a plurality of first joint teeth distributed along the circumferential direction, and the second joint part is provided with a plurality of second joint teeth distributed along the circumferential direction.

18. The drive shaft locking device for the vehicle according to any one of claims 1-17, wherein the drive needle is fit with the first joint part.

19. A power-driven system, comprising:
the drive shaft locking device for the vehicle according to any one of claims 1-18;
a first motor generator, wherein the first motor generator is in transmission with a first drive shaft and outputs power to one of a pair of wheels; and
a second motor generator, wherein the second motor generator is in transmission with a second drive shaft and outputs power to the other one of the pair of wheels.

20. A vehicle, comprising the power-driven system according to claim 19.
